# EUROPÄISCHE PATENTSCHRIFT

(11) **EP 3 717 105 B1**
(45) Veröffentlichungstag und Bekanntmachung des Hinweises auf die Patenterteilung: **24.09.2025**
(21) Anmeldenummer: 18800604.3
(22) Anmeldetag: 08.11.2018
(51) Int. Cl.: B01D 61/14, B01D 35/30, B01D 46/24, B01D 29/52, B01D 29/56, B01D 61/16, B01D 61/18, B01D 61/20, B01D 63/04, B01D 65/10

(54) **EINWEG-VORRICHTUNG ZUR FILTRATION EINES GROSSEN MEDIUMVOLUMENS**
DISPOSABLE DEVICE FOR FILTERING A LARGE MEDIUM VOLUME
DISPOSITIF À USAGE UNIQUE POUR LA FILTRATION D'UN VOLUME IMPORTANT DE SUBSTANCE

(30) Priorität: 27.11.2017 DE 102017127933
(43) Veröffentlichungstag der Anmeldung: 07.10.2020
(73) Patentinhaber: Sartorius Stedim Biotech GmbH, 37079 Göttingen (DE)
(72) Erfinder: WORTMEYER, Johannes, 37079 Göttingen (DE); SOMMER, Maik, 37079 Göttingen (DE); FRIESE, Thomas, 37079 Göttingen (DE); LOEWE, Thomas, 37079 Göttingen (DE)
(74) Vertreter: Novagraaf International SA
(86) Internationale Anmeldenummer: PCT/EP2018/080644
(87) Internationale Veröffentlichungsnummer: WO 2019/101541

(56) Entgegenhaltungen:
- WO-A1-2008/039278
- WO-A1-2017/032560
- WO-A2-2014/088882
- DE-U1- 202017 103 082
- JP-A- 2006 181 469

## Beschreibung

Die Erfindung betrifft eine Einweg-Vorrichtung zur Filtration eines großen Mediumvolumens.

Allgemein finden in der pharmazeutischen Fertigung von hochwertigen Wirkstoffen Einweg-Vorrichtungen aufgrund der damit erreichbaren hohen Flexibilität sowie Einsparung von Zeit, Investitionen und Betriebsaufwand wie Reinigung und deren Validierung und Überprüfung zunehmend Verbreitung. Einweg-Vorrichtungen werden verstärkt für einen größeren Maßstab (Prozesse mit großen Volumina) gewünscht, wobei die Kosten für solche Systeme nicht unrealistisch hoch anwachsen sollen.

Die WO 2017/032560 A1 zeigt eine vollständig vorsterilisierbare, anschlussfertige und integritätstestbare Einweg-Filtrationsvorrichtung, die für großvolumige Filtrationsprozesse ausgelegt ist. Diese Einweg-Filtrationsvorrichtung umfasst eine Mehrzahl von Einweg-Filtercapsulen einer Standardgröße, die in einem vorgegebenen Raster angeordnet und durch Leitungen miteinander verbunden sind. Die Filtercapsulen werden von einer starren Halterung getragen.

Die DE 20 2017 103 082 U1 beschreibt eine vorkonfigurierte Einweg-Filtrationsvorrichtung mit einer Einweg-Hohlfaser-Filtercapsule und einem sterilisierbaren Luftfilter, der über eine Entlüftungsleitung an einem Entlüftungsanschluss der Einweg-Filtercapsule angeschlossen ist.

Aus der WO 2008/039278 A1 ist eine Wasserfiltrationsanlage zur Trinkwassergewinnung bekannt, die Mikroorganismen und organische Verunreinigungen entfernt und Behälter Wasserleitungen sterilisiert.. Bei einer Ausführungsform dieser Anlage fließt das Wasser zuerst in einen 5-Mikron-Filter 62 und anschließend in einen 1-Mikron-Filter.

Aufgabe der Erfindung ist es, eine kostengünstige und effektive Einweg-Filtrationsvorrichtung zu schaffen, die für eine Virusfiltration in großem Maßstab geeignet ist.

Gelöst wird diese Aufgabe durch eine Vorrichtung mit den Merkmalen des Anspruchs 1 und ein Verfahren mit den Merkmalen des Anspruchs 14. Vorteilhafte und zweckmäßige Ausgestaltungen der erfindungsgemäßen Vorrichtung sind in den Unteransprüchen angegeben.

Die erfindungsgemäße Einweg-Vorrichtung zur Filtration eines großen Mediumvolumens umfasst eine Mehrzahl von Einweg-Filtereinheiten, von denen wenigstens einige, vorzugsweise alle, durch starre Leitungen, die durch druckstabile Rohrleitungen mit definiertem Durchmesser gebildet sind, miteinander verbunden sind. Gemäß der Erfindung umfassen die Filtereinheiten mehrere Vorfilter und mehrere als Hohlfasercapsule ausgebildete Hauptfilter zur Virusfiltration. Es ist eine gemeinsame Ausgangsleitung für mehrere Vorfilter vorgesehen. Zwischen den Vorfiltern und den Hauptfiltern ist in der Ausgangsleitung wenigstens ein Sperrventil vorgesehen, um alle Hauptfilter zu einer von den Vorfiltern getrennten Gruppe zusammenschalten zu können. Für die Hauptfilter ist eine gemeinsame Entlüftungsleitung vorgesehen, die zu einem unfiltratseitigen Steril-Luftfilter führt, sodass über den Steril-Luftfilter durch die Entlüftungsleitung allen Hauptfiltern Prüfgas zugeführt werden kann für die Durchführung eines Integritätstests aller Hauptfilter.

Allgemein hat ein Vorfilter immer eine Membran mit größeren Poren als ein nachgeschalteter Hauptfilter. Eine typische Klassifizierung von porösen Membranen kann anhand ihrer Porengrößen getroffen werden. So wird auf Grundlage der Porengröße generell zwischen Mikrofiltrationsmembranen (mittlere Porengröße: 0,1 bis 10 µm), Ultrafiltrationsmembranen (mittlere Porengröße: 0,01 bis weniger als 0,1 µm), Nanofiltrationsmembranen (mittlere Porengröße: 0,001 bis weniger als 0,01 µm) und Revers-Osmosemembranen (mittlere Porengröße: 0,0001 bis weniger als 0,001 µm) unterschieden (siehe Shang-Tian Yang, Bioprocessing for Value-Added Products from Renewable Resources, 2007). Die Bestimmung der mittleren Porengröße erfolgt im Bereich der Mikrofiltration beispielsweise mittels der Kapillarfluss-Porometrie (siehe Shrestha, Aabhash, "Characterization of porous membranes via porometry" (2012), Mechanical Engineering Graduate Theses & Dissertations, Paper 38). Für die Charakterisierung der Porengrößenverteilung bei Ultra- und Nanofiltrationsmembranen wird ein ähnliches Messverfahren eingesetzt mit dem Unterschied, dass nicht Gasflussraten sondern Flussraten der verdrängenden Flüssigkeit in Abhängigkeit der differentiell Druckerhöhung aufgenommen werden (siehe R. Dávila, Characterization of Ultra and Nanofiltration commercial Filters by Liquid-Liquid Displacement Porosimetry, 2013.)

Während die Hauptfilter der erfindungsgemäße Einweg-Filtrationsvorrichtung als Hohlfasercapsulen für die Virusfiltration mit einer typischen mittleren Porengröße von 0,01 bis 0,1 µm, vorzugsweise 0,02 µm, ausgebildet sind, kommen als Vorfilter plissierte Filterelemente, Flachfilter, Hohlfasercapsulen, Tiefenfilter etc. in Betracht. Die Vorfilter können auch Sterilfilter mit einer Porengröße im Bereich von 0,1 bis 8 µm, vorzugsweise 0,2 µm, sein.

Die Erfindung beruht auf der Erkenntnis, dass eine Kombination von mehreren Einweg-Filtereinheiten, die starr miteinander verrohrt sind, eine Filtration in großem Maßstab bewältigen kann.

Die starren Leitungen, insbesondere eine gemeinsame Eingangsleitung und/oder eine gemeinsame Ausgangsleitung für mehrere Vorfilter und/oder eine gemeinsame Eingangsleitung und/oder eine gemeinsame Ausgangsleitung für mehrere Hauptfilter der Einweg-Filtrationsvorrichtung, sind vorzugsweise durch druckstabile Rohre mit definiertem Durchmesser gebildet. Das bedeutet, dass der Durchmesser nicht willkürlich gewählt ist und nicht während des Betriebs infolge von Materialdehnung o. ä. variiert. Dadurch ergibt sich beim Anströmen der Filtereinheiten eine gleichmäßige Druckverteilung und eine gleichmäßige Strömungsgeschwindigkeit des Filtrationsmediums. Dies wäre bei einer Verschaltung der Filtereinheiten mit (dünnen) Schläuchen nicht gegeben, da typischerweise unterschiedliche Schlauchlängen und unterschiedliche Schlauchdurchmesser vorhanden wären, deren Konstanz während des Betriebs, gerade bei hohem und schwankendem Druck, nicht gewährleistet wäre. Zudem ist bei der Verwendung von starren Verteilerrohren vorteilhaft, dass durch ein gemeinsames Anströmvolumen eine Strömungsberuhigung bewirkt und Druckstöße vermindert werden. Die Minderung der Druckstöße schützt allgemein Membranen, welche eine Wandstärke von weniger als 150 µm aufweisen, was im Besonderen auf die zur Virusfiltration verwendeten Hohlfaser-Filterelemente zutrifft. Durch die insgesamt erreichte Vermeidung von Druckschwankungen wird im Vergleich zu druckpulsationsreichen Phagenfiltrationen ein höherer Phagenrückhalt erreicht.

Besonders bevorzugt ist die Verbindung von Vorfiltern und Hauptfiltern mit einer starren Verrohrung, insbesondere bevorzugt mit identischen Rohrinnendurchmessern, innerhalb der Einweg-Filtrationsvorrichtung ausgebildet. Dadurch ergeben sich neben den erwähnten gleichmäßigen Strömungsbedingungen und geringeren Druckschwankungen noch weitere Vorteile. Es lässt sich insgesamt ein kompakter, stabiler Aufbau mit weniger Anschlüssen und weniger Totvolumen erreichen. Die Vorrichtung ist somit insgesamt besser handhabbar.

Insbesondere ist bei der erfindungsgemäßen Einweg-Filtrationsvorrichtung vorgesehen, dass zwischen den Vorfiltern und den Hauptfiltern eine starre Leitung aus einer druckstabilen Rohrleitung mit definiertem Durchmesser vorhanden ist.

Besonders bevorzugt ist auch die Ausbildung einer Eingangsleitung zu den Hauptfiltern als eine starre Leitung aus einer druckstabilen Rohrleitung mit definiertem Durchmesser.

Für die bevorzugte Anwendung der Virusfiltration ist ein Aufbau vorgesehen, bei dem die mehreren Vorfilter als Gruppe mit einer Gruppe der Hauptfilter in Reihe geschaltet sind.

Im Hinblick auf eine problemlose Einbindung der erfindungsgemäßen Einweg-Filtrationsvorrichtung in eine Prozesskette weist die Vorrichtung sowohl einen gemeinsamen Eingangsanschluss als auch einen gemeinsamen Ausgangsanschluss für das Filtrationsmedium auf und ist mittels Steril-Konnektoren in einen vorhandenen Filtrationsstrang einer Prozessanordnung integrierbar.

Für die meisten Anwendungen ist es sinnvoll, die Vorfilter und die Hauptfilter jeweils zusammenzufassen und als Gruppe gleichzeitig anzuströmen, d. h. die Filtereinheiten und die starren Leitungen sind so angeordnet, dass alle Vorfilter und alle Hauptfilter jeweils parallel angeströmt werden.

Gemäß einer bevorzugten Ausführungsform sind die Vorfilter für eine Dead-End-Filtration und die Hauptfilter für eine Querstromfiltration ausgelegt. Grundsätzlich besteht jedoch sowohl für die Vorfilter als auch für die Hauptfilter die Wahlmöglichkeit, diese für eine Dead-End-Filtration oder für eine Querstromfiltration auszulegen.

Die erfindungsgemäß vorgesehenen starren Leitungen zwischen den Filtereinheiten können gemäß einer Weiterbildung der Erfindung auch durch gemeinsame Gehäuse der Filtereinheiten gebildet sein. Das bedeutet, dass zwischen bestimmten Filtereinheiten keine separaten Leitungen vorgesehen sind, sondern die Filtereinheiten sind zu einer Baueinheit zusammengefasst.

Wenigstens eine Filtereinheit kann als Mehrfach-Capsule mit wenigstens zwei Filterelementen ausgebildet sein, die in einem gemeinsamen Gehäuse verbaut sind. Die Filterelemente in der Mehrfach-Capsule können gleichartig oder verschieden sein. Die Verwendung solcher Mehrfach-Capsulen reduziert die benötigten Verbindungen innerhalb der erfindungsgemäßen Einweg-Filtrationsvorrichtung und die Fläche, die innerhalb eines Produktionsraums für das Aufstellen der Vorrichtung in Anspruch genommen wird.

Innerhalb einer Mehrfach-Capsule können die darin befindlichen Filterelemente entweder so angeordnet sein, dass sie parallel angeströmt werden, oder so, dass sie sequentiell angeströmt werden. Die erste Anordnung empfiehlt sich bei gleichartigen Filterelementen, die alle zur Vorfiltration bzw. alle zur Hauptfiltration dienen. Die zweite Anordnung empfiehlt sich bei verschiedenartigen Filterelementen, wenn die eine Art zur Vorfiltration und die andere Art zur Hauptfiltration innerhalb derselben Capsule vorgesehen ist.

Insbesondere lassen sich in einer Mehrfach-Capsule ein Vorfilter und ein Hauptfilter kombinieren, indem die Mehrfach-Capsule wenigstens ein plissiertes Filterelement (Vorfilter) und ein Hohlfaserfilterlement (Hauptfilter) aufweist. Wie oben angedeutet können aber auch zwei oder mehr plissierte Filterelemente als Mehrfach-Vorfilter innerhalb einer Capsule vorgesehen sein, die dann über eine starre Verbindungsleitung mit einer Hohlfasercapsule verbunden ist. Ebenso ist es möglich, dass mehrere Hohlfaserelemente in einer Capsule angeordnet sind, die jeweils alle als Vorfilter oder jeweils alle als Hauptfilter dienen oder von denen wenigstens eine als Vorfilter und wenigstens eine als Hauptfilter dient. Wie eingangs erläutert kann auch ein Sterilfilter als Vorfilter in die Mehrfach-Capsule eingebaut sein, sodass z. B. für eine stufenweise Filtration die Kombination (plissierter oder Hohlfaser-)Vorfilter, Sterilfilter und Hauptfilter innerhalb einer Capsule verbaut sein kann.

In einer weiteren bevorzugten Ausführungsform sind bestimmte Filtereinheiten, insbesondere eine Gruppe von Hauptfiltern und/oder eine Gruppe von Vorfiltern, jeweils als Modul ausgebildet. Die modulare Aufteilung ermöglicht das einfache Einsetzen oder Austauschen einer ganzen Filtergruppe. Ebenso ist es möglich, eine Gruppe von Filtern auf einmal auf Integrität zu testen, und zwar innerhalb der Vorrichtung oder außerhalb (offline).

Gemäß der Erfindung ist für die Hauptfilter eine gemeinsame Entlüftungsleitung vorgesehen, die zu einem Steril-Luftfilter führt. Über den Steril-Luftfilter kann in umgekehrter Richtung ein Prüfgas zu den Filtereinheiten gepumpt werden, um diese gemeinsam einem Integritätstest zu unterziehen.

Zum Schutz des Steril-Luftfilters vor einem Verblocken infolge eines unerwünschten Kontakts mit Flüssigkeit kann vorgesehen sein, dass in die gemeinsame Entlüftungsleitung ein druckstabiles Schauglas integriert ist. Das Schauglas ermöglicht eine visuelle Überprüfung der korrekten Entlüftung und kann zudem zur Anzeige des Füllstands in der bzw. den Filtereinheiten genutzt werden. Der etablierte Begriff "Schauglas" bezeichnet allgemein einen durchsichtigen Röhrenabschnitt und ist bezüglich der Materialauswahl nicht einschränkend zu verstehen. Neben echtem Glas kann auch ein transparenter Kunststoff für die druckstabile Ausbildung des Röhrenabschnitts verwendet werden. Eine andere oder ergänzende Lösung zur Sichtbarmachung von Flüssigkeit in der Entlüftungsleitung besteht darin, in der Entlüftungsleitung einen Indikator anzuordnen, der auf Wasser reagiert, z. B. durch eine deutlich sichtbare Farbänderung. Vor dem Eingang des Steril-Luftfilters kann auch ein zusätzlicher Schutzfilter zum Schutz des Steril-Luftfilters zwischengeschaltet sein, der den Durchtritt von Wasser verhindert.

Ein in der Entlüftungsleitung oder am Steril-Luftfilter vorgesehenes Entlüftungsventil kann nach der Filtration freigegeben werden, sodass ein Teil des verbliebenen Unfiltrates aufgrund des durch dessen Eigengewicht bewirkten statischen Drucks die Filtereinheiten noch passieren und somit die Filtratmenge erhöhen kann, wobei das geöffnete Entlüftungsventil das Nachströmen von steriler Luft gestattet.

Um in diesem Zusammenhang eine gezielte Integritätsprüfung für alle Hauptfilter innerhalb der Vorrichtung zu ermöglichen, ist zwischen den Vorfiltern und den Hauptfiltern in der gemeinsamen Ausgangsleitung für mehrere Vorfilter wenigstens ein Sperrventil vorgesehen.

Vorzugsweise ist wenigstens eine Filtereinheit der der erfindungsgemäßen Einweg-Filtrationsvorrichtung, vorzugsweise alle Hauptfilter, so ausgerichtet, dass sie von unten nach oben angeströmt wird. Eine solche Anströmung der Filtereinheit sorgt für gleichmäßige hydrostatische Bedingungen, die wiederum eine Vergleichmäßigung der Filtration und damit eine Verbesserung der Phagenrückhaltung bewirkt.

Bei einer bevorzugten Ausbildung der Filtereinheiten, insbesondere der Hauptfilter, sind jeweils ein unterer Unfiltrat-Eingang sowie ein unterer Filtrat-Ausgang und ein oberer Filtrat-Ausgang sowie ein oberer Entlüftungsanschluss vorgesehen. Von den beiden Filtrat-Ausgängen kann einer zum Abführen eines Spül- oder Benetzungsmediums oder im Rahmen eines Integritätstests zur Zuführung eines Prüfgases genutzt werden.

Das Vorsehen von Ventilen zum Sperren der unteren Unfiltrat-Eingänge und zum Sperren der Entlüftungsanschlüsse ist für eine gezielte Prüfung einzelner Filtereinheiten oder Gruppen von Filtereinheiten auf Integrität vorteilhaft. Die nicht zu prüfenden Filtereinheiten werden durch entsprechende Ventilstellungen ausgegrenzt. Die Prüfung erfolgt beispielsweise über einen Filtrat-Ausgang.

Im Hinblick auf eine übersichtliche Anordnung der Ventile und eine einfache Bedienbarkeit ist es vorteilhaft, die Mehrzahl der Ventile auf derselben Seite der Einweg-Filtrationsvorrichtung anzuordnen.

An einem Ausgang einer Filtereinheit oder einer Gruppe von Filtereinheiten kann ein Durchfluss-reduzierendes Element vorgesehen sein, um für einen Spülvorgang einen Differenzdruck entstehen zu lassen. Ein solcher Spülvorgang ist im Rahmen eines Integritätstests sinnvoll, um eine ausreichende Benetzung der Filtermembranen sicherzustellen.

Eine Weiterbildung der erfindungsgemäßen Einweg-Filtrationsvorrichtung sieht einen zusätzlichen Anschluss auf der Filtratseite der Vorrichtung vor, an den ein Steril-Luftfilter anschließbar ist. Durch diesen Steril-Luftfilter kann nach Beendigung einer Filtration Gas zum Abführen von in der Vorrichtung verbliebenem Filtrat gepumpt werden. Ein vollständiges Entleeren der Vorrichtung ist deshalb von besonderem Interesse, weil die ansonsten in der Vorrichtung verbleibende, nicht genutzte Produktlösung einen erheblichen Wert haben kann (in der Größenordnung von 500 bis 5.000 €/l). Während des regulären Filtrationsbetriebs wird der zusätzliche Anschluss mit dem Steril-Luftfilter durch ein Ventil oder dergleichen vor einem Kontakt mit dem Filtrationsmedium geschützt.

Unabhängig von dem zuletzt genannten Steril-Luftfilter ist in der Regel der bereits vorher erwähnte Steril-Luftfilter an einer gemeinsamen Entlüftungsleitung (ggf. unter Zwischenschaltung einer weiteren (Schlauch-)Leitung) vorgesehen, um für die Durchführung eines Integritätstests ein steriles Prüfgas hineinzupumpen. Der Steril-Luftfilter kann ebenfalls durch ein Ventil an der Entlüftungsleitung oder am Steril-Luftfilter selbst geschützt werden.

Gemäß einer weiteren bevorzugten Ausführungsform sind die Leitungen zu den Filtereinheiten hin, von den Filtereinheiten weg oder zwischen den Filtereinheiten so ausgebildet, dass sie steril trennbar sind. So lassen sich für eine fachgerechte Entsorgung handliche Segmente aus der Einweg-Filtrationsvorrichtung abtrennen, die dann einzeln getragen und einzeln in einen Autoklav gelegt werden können.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine perspektivische Ansicht einer erfindungsgemäßen Einweg-Filtrationsvorrichtung;
- Figur 2 eine Seitenansicht der Vorrichtung aus Figur 1; und
- Figur 3 eine perspektivische Ansicht eines Teils einer erfindungsgemäßen Einweg-Filtrationsvorrichtung mit einem zusätzlichen Luftfilter.

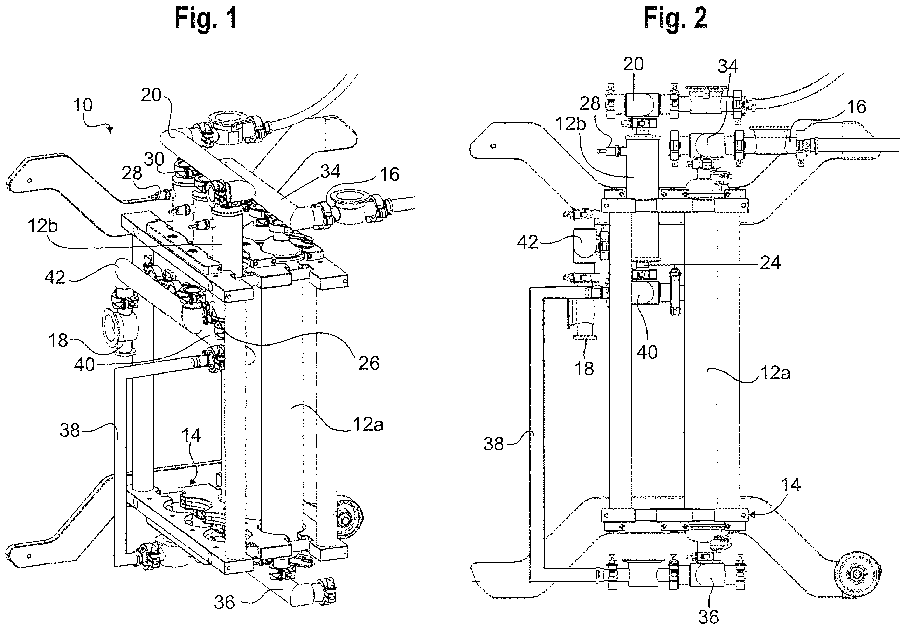

In den Figuren 1 und 2 ist eine Einweg-Filtrationsvorrichtung 10 dargestellt, die eine Mehrzahl von Filtereinheiten 12, hier in Form von Filtercapsulen, umfasst. Die Filtereinheiten 12 werden von einer starren Halterung 14 (Rack) in einer vorgegebenen Anordnung (Raster) in Position gehalten.

Von den Filtereinheiten 12 ist wenigstens eine Einheit eine Hohlfasercapsule zur Virusfiltration (nachfolgend der Einfachheit halber nur als Hauptfilter 12b bezeichnet). Wenigstens eine Filtereinheit 12 dient zur Vorfiltration (nachfolgend der Einfachheit halber nur als Vorfilter 12a bezeichnet). Bevorzugt enthalten die Vorfilter 12a plissierte Filterelemente, obwohl auch andere Ausbildungen möglich sind. Optional können noch Steril-Filter für eine stufenweise Filtration vorgesehen sein.

Vorzugsweise ist das Verhältnis der Anzahl von Vorfiltern 12a zu Hauptfiltern 12b 1:1. Andere Verhältnisse, insbesondere von 1:2, 2:1; 1:3, 3:1, können je nach den jeweiligen Umständen (Größe, Anordnung der Filter etc.) auch sinnvoll sein. Für optimale Filtrationsbedingungen können auch die effektiven Filterflächen der Vorfilter 12a und der Hauptfilter 12b herangezogen werden, wobei die gleichen bevorzugten Verhältnisse gelten.

Die Einweg-Filtrationsvorrichtung 10 hat einen gemeinsamen Eingangsanschluss 16 (Unfiltratseite) und einen gemeinsamen Ausgangsanschluss 18 (Filtratseite) für alle Filtereinheiten 12, sodass sie in einen Filtrationsstrang integriert werden kann.

Die Filtereinheiten 12 sind innerhalb der Vorrichtung 10 vollständig oder zumindest großteils durch starre, druckstabile Rohrleitungen mit definiertem Durchmesser miteinander verbunden. Die starren Rohrleitungen gewährleisten ein gleichmäßiges Strömungsverhalten ohne Druckschwankungen während des Betriebs. Der Verlauf der Rohrleitungen ist bestimmt durch den vorgesehenen Betrieb der Einweg-Filtrationsvorrichtung 10 (Parallel- und/oder Reihenschaltung aller oder bestimmter Filtereinheiten 12), wobei die Rohrleitungen die notwendigen Abzweigungen zu den einzelnen Filtereinheiten 12 aufweisen. Soweit erforderlich sind die Rohrleitungen an der Halterung 14 befestigt.

Bei dem in den Figuren 1 und 2 gezeigten Ausführungsbeispiel sind verschieden große Vorfilter 12a und Hauptfilter 12b in der stabilen Halterung 14 (Rack) angeordnet. Insbesondere die Hauptfilter 12b sind jeweils als stehende Filtercapsule mit einem Unfiltrat-Eingang 24 auf der unteren Stirnseite der Filtercapsule und zwei Filtrat-Ausgängen 26, 28 ausgebildet, die intern miteinander verbunden sind und von denen einer am unteren Ende und einer am oberen Ende der Filtercapsule angeordnet ist. Für die Filtration an sich ist nur ein Filtrat-Ausgang erforderlich. Der Zweck des zusätzlichen, optionalen Filtrat-Ausgangs wird später noch erläutert.

Das zu filtrierende Medium strömt vom Eingangsanschluss 16 durch eine gemeinsame Vorfilter-Eingangsleitung 34, die als starres Verteilerrohr mit definiertem Durchmesser und Abzweigungen zu den Vorfiltern 12a ausgebildet ist. Die Vorfilter-Eingangsleitung 34 verteilt das Medium parallel auf alle Vorfilter 12a. Nach Durchtritt durch die Vorfilter 12a wird das vorfiltrierte Medium in einer gemeinsamen Vorfilter-Ausgangsleitung 36 gesammelt, die wiederum als starres Sammelrohr mit definiertem Durchmesser und Abzweigungen zu den Vorfiltern 12a ausgebildet ist.

Von der Vorfilter-Ausgangsleitung 36 gelangt das vorfiltrierte Medium über eine weitere starre Verbindungsleitung 38 zu einer gemeinsamen Hauptfilter-Eingangsleitung 40, die als starres Verteilerrohr mit definiertem Durchmesser und Abzweigungen zu den Hauptfiltern 12b ausgebildet ist. Die Hauptfilter-Eingangsleitung 40 verteilt das Medium parallel auf alle Hauptfilter 12b. Nach Durchtritt durch die Hauptfilter 12b strömt das filtrierte Medium aus den unteren Filtrat-Ausgängen 26 und wird in einer gemeinsamen Hauptfilter-Ausgangsleitung 42 gesammelt, die wiederum als starres Sammelrohr mit definiertem Durchmesser und Abzweigungen zu den Hauptfiltern 12b ausgebildet ist. Das Filtrat strömt schließlich durch den Ausgangsanschluss 18 aus der Vorrichtung 10 heraus.

Auch für die oberen Filtrat-Ausgänge 28 kann eine (hier nicht dargestellte) gemeinsame Hauptfilter-Ausgangsleitung vorgesehen sein, die als starres Sammelrohr mit definiertem Durchmesser ausgebildet ist.

Die Hauptfilter 12b mit ihren Unfiltrat-Eingängen 24 und die Rohrleitungen sind so ausgerichtet, dass die Hauptfilter 12b von unten nach oben durchströmt werden, was für gleichmäßige hydrostatische Bedingungen sorgt.

Sowohl die Vorfilter 12a als auch die Hauptfilter 12b sind für eine Dead-End-Filtration ausgelegt. Es ist aber auch möglich, dass die Vorfilter 12a für eine Dead-End-Filtration und die Hauptfilter 12b für eine Querstrom-Filtration ausgelegt sind. Gerade bei der Virusfiltration ist die längere Standzeit von Querstromfiltern im Vergleich zu Dead-End-Filtern von Bedeutung.

Die Filtereinheiten 12 können als Mehrfach-Capsulen ausgebildet sein. Das bedeutet, dass in einem gemeinsamen oder mehreren starr miteinander verbundenen Gehäusen mehrere gleichartige oder unterschiedliche Filterelemente untergebracht sind. Die Filterelemente innerhalb der Mehrfach-Capsule können je nach Aufbau parallel oder sequentiell angeströmt werden. Insbesondere können zwei oder mehr Hohlfasercapsulen in einem Gehäuse untergebracht sein. In einer anderen Ausführung ist eine Mehrfach-Capsule mit wenigstens einem plissierten Filterelement und einem Hohlfaserfilterlement vorgesehen. Die Mehrfach-Capsulen können allgemein als Hauptfilter 12b oder als Vorfilter 12a konfiguriert sein. Auch eine Kombination von Vorfilter 12a und Hauptfilter 12b innerhalb eines Mehrfach-Capsulen-Gehäuses ist möglich.

Die Hauptfilter 12b weisen auf ihrer oberen Stirnseite Entlüftungsanschlüsse 30 auf, die in eine gemeinsame Entlüftungsleitung 20 münden. Die Entlüftungsleitung 20 ist als starres Sammelrohr mit definiertem Durchmesser und Abzweigungen zu den Hauptfiltern 12b ausgebildet. Die Entlüftungsleitung 20 führt, ggf. über eine weitere (Schlauch-)Leitung, zu einem (in den Figuren 1 und 2 nicht dargestellten) Steril-Luftfilter 22.

Die gemeinsame Entlüftungsleitung 20 kann in Strömungsrichtung vor dem Steril-Luftfilter 22 ein druckstabiles Schauglas enthalten. Das Schauglas macht zum Steril-Luftfilter 22 hochsteigendes Medium für den Anwender sichtbar. Dadurch wird eine optische Kontrolle der korrekten Entlüftung ermöglicht, sodass der Anwender ggf. rechtzeitig entsprechende Maßnahmen ergreifen kann, bevor der Steril-Luftfilter 22 eventuell mit Flüssigkeit in Berührung kommt und deshalb verblockt. Dies kann vor allem dann passieren, wenn Flüssigkeit auf einem die Membran des Steril-Luftfilters 22 stützenden Vlies eine Art Film bildet. Das Schauglas kann auch dazu genutzt werden, um den Füllstand in der bzw. den Filtereinheiten 12 zu überwachen.

Für die gleichen Zwecke kann alternativ oder zusätzlich zu dem Schauglas ein Indikator in der Entlüftungsleitung 20 angeordnet sein, der auf Wasser reagiert. Solche Wasser-Kontakt-Indikatoren sind als Klebebänder, die sich bei Berührung mit Wasser rot verfärben, oder auf Basis von Blaugel (Kieselgel) erhältlich, das sich blassrosa verfärbt. Eine weitere Schutzmaßnahme ist ein vor dem Steril-Luftfilter 22 angeordneter Schutzfilter, der als Flachfilter ohne Stützvliese oder dergleichen ausgebildet ist. Die Luftfiltermembran des Schutzfilters kann aus Polyvinylidenfluorid (PVDF), Polyethylen (PE), hydrophobem Polyethersulfon (PESU) oder Polytetrafluorethylen (PTFE) gebildet sein. Da der Schutzfilter keine Stützvliese aufweist, ist die Gefahr einer Verblockung minimiert.

Der Steril-Luftfilter 22 kann im Rahmen eines Integritätstests auch als Prüfgas-Eingang benutzt werden, wie noch beschrieben wird.

Alle oder bestimmte Filtereinheiten 12, insbesondere die Hauptfilter 12b und die Vorfilter 12a, bilden jeweils ein Modul, sodass ein Integritätstest für ein ganzes Modul innerhalb der Einweg-Filtrationsvorrichtung 10, aber auch außerhalb der Einweg-Filtrationsvorrichtung 10 (offline) durchgeführt werden kann.

Zwischen den Filtereinheiten 12 können Sperrventile vorgesehen sein, sodass Verbindungen zwischen bestimmten Filtereinheiten 12 gezielt gesperrt werden können. Dies ermöglicht eine gezielte sterile Entlüftung bzw. einen gezielten sterilen Integritätstest einer einzelnen Filtereinheit 12 oder einer Gruppe von zusammengeschalteten Filtereinheiten 12, z. B. aller Vorfilter 12a und aller Hauptfilter 12b.

Bei der Durchführung eines Integritätstests können einzelne Filtereinheiten 12, eine oder mehrere Gruppen von Filtereinheiten 12 oder alle in der Vorrichtung 10 verbauten Filtereinheiten 12 zusammen geprüft werden.

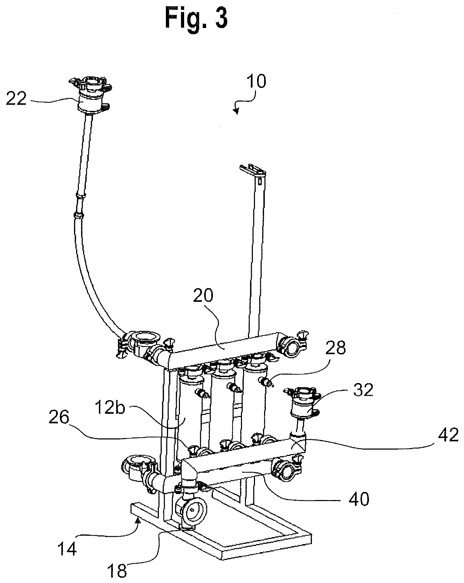

Bevorzugt ist die Prüfung aller Hauptfilter 12b in einem Prüfschritt, um Kosten und Zeit zu sparen. Hierzu wird über einen Steril-Luftfilter 22 (siehe Figur 3) von der Unfiltratseite durch die Entlüftungsleitung 20 Prüfgas zugeführt. Bei dieser Prüfung muss einzig ein Ventil an der Vorfilter-Ausgangsleitung 36 der Vorrichtung 10 geschlossen werden.

Bei einer separaten Prüfung einzelner Hauptfilter 12b über den unfiltratseitigen Steril-Luftfilter 22 sind für jeden Entlüftungsanschluss 30 und für jeden Unfiltrat-Eingang 24 Ventile (nicht gezeigt) zum selektiven Sperren und Freigeben der Anschlüsse bzw. Eingänge vorgesehen. Die Ventile werden je nach zu prüfendem Hauptfilter 12b geschaltet.

Wenn alle Filtereinheiten, einschließlich der Vorfilter 12a, geprüft werden sollen, ist statt der Einführung des Prüfgases durch die Entlüftungsleitung 20 auch ein Pumpen des Prüfgases in den Unfiltrat-Eingangsanschluss 16 der Vorrichtung 10 möglich. Hierzu wird ein Steril-Luftfilter an den Eingangsanschluss 16 angeschlossen, den das Prüfgas passiert, bevor es durch die Unfiltrat-Eingänge 24 in die Filtereinheiten 12 gelangt.

Es ist auch möglich, die Filtereinheiten 12 gemeinsam oder einzeln zu prüfen, indem man über einen Steril-Luftfilter das Prüfgas durch die oberen Filtrat-Ausgänge 28 in die Einweg-Filtrationsvorrichtung 10 pumpt. Hierzu werden bei einer gemeinsamen Prüfung alle oberen Filtrat-Ausgänge 28 an das Prüfgas angeschlossen, ggf. über ein an diese Ausgänge angeschlossenes Sammelrohr, oder nur an einen der oberen Filtrat-Ausgänge 28, während die verbleibenden Filtrat-Ausgänge 28 mit einem Ventil (nicht gezeigt) verschlossen werden. Die unteren Filtrat-Ausgänge 26 müssen je nach Art der Prüfung (gemeinsame oder einzelne Prüfung) mit Ventilen (nicht gezeigt) geschlossen werden.

Die wichtigsten, vorzugsweise alle zur Bedienung der Einweg-Filtrationsvorrichtung 10 benötigten Ventile befinden sich auf derselben Seite der Einweg-Filtrationsvorrichtung 10, was eine verbesserte Übersicht und vereinfachte Bedienbarkeit schafft.

Vor der Durchführung eines Integritätstests kann es vorteilhaft sein, die Filtereinheiten 12, insbesondere die Hauptfilter 12b, mit einem Differenzdruck mit einem Benetzungsmedium zu spülen. Dadurch wird eine ausreichende Benetzung für den Integritätstest gewährleistet. Um nur den Eingangsdruck zu regeln, ist am Ausgang der jeweiligen Filtereinheit 12 bzw. Filtereinheit-Gruppe ein Durchfluss-reduzierendes Element vorgesehen, welches nur einen geringen Durchfluss zulässt und somit einen Differenzdruck entstehen lässt. Das jeweilige Durchflussreduzierende Element muss dabei auf die Größe und Anzahl der zu spülenden Filtereinheiten 12 abgestimmt sein. Beispielsweise sind für eine Vorrichtung mit drei, sechs oder neun (Haupt-)Filtereinheiten 12 unterschiedliche Widerstände notwendig. Ein solches Durchfluss-reduzierendes Element ist typischerweise für einen gewissen Anwendungsbereich ausgelegt, etwa für eine Kombination von vier bis sechs Filtereinheiten 12 einer bestimmten Bauart. Für eine andere Anzahl solcher Filtereinheiten 12 (z. B. zwei oder sieben) ist dann ein entsprechend anders ausgelegtes Durchfluss-reduzierendes Element vorzusehen.

Eine Möglichkeit zur variablen Anpassung ist die Verwendung unterschiedlich langer Schläuche am Ausgang der zu spülenden Filtereinheiten 12. Der Widerstand, der durch den Schlauch erzeugt wird (Reibung der Flüssigkeit an der Innenfläche des Schlauches) kann durch Veränderung der Schlauchlänge eingestellt werden. Eine weitere Möglichkeit, den Durchfluss für einen Spülvorgang variabel zu gestalten, ist eine Ausführung des Durchfluss-reduzierenden Elements als (Proportional-)Ventil, z. B. in Form eines Quetsch- oder Membranventils.

In Figur 3 ist ein Teil einer Ausführungsform der Einweg-Filtrationsvorrichtung 10 gezeigt, bei der der besseren Übersichtlichkeit halber nur Hauptfilter 12b zu sehen sind. Jedoch ist hier der über eine Schlauchleitung an die gemeinsame Entlüftungsleitung 20 angeschlossene unfiltratseitige Steril-Luftfilter 22 dargestellt. Nach der Filtration kann ein in der Entlüftungsleitung 20 oder am Steril-Luftfilter 22 vorgesehenes Entlüftungsventil freigegeben werden, sodass durch den Steril-Luftfilter 22 sterilisierte Luft zu den Filtereinheiten 12 nachströmen kann. Dadurch wird es ermöglicht, dass ein Teil des verbliebenen Unfiltrates durch sein Eigengewicht aufgrund des statischen Drucks die Filter(elemente) der Filtereinheiten 12 passieren und somit die Filtratmenge erhöhen kann. Dies wird durch die bevorzugte senkrechte Einbauweise der Filter(elemente) in den Filtereinheiten 12 begünstigt.

Außerdem ist bei der in Figur 3 gezeigten Ausführungsform an einem zusätzlichen Anschluss auf der Filtratseite der Vorrichtung 10, genauer gesagt an der Hauptfilter-Ausgangsleitung 42, ein weiterer, filtratseitiger Steril-Luftfilter 32 vorgesehen. Durch diesen filtratseitigen Steril-Luftfilter 32 kann nach Beendigung der Filtration steriles Gas gepumpt werden, um das in der Vorrichtung 10 verbliebene Filtrat durch den Ausgangsanschluss 18 abzuführen. Während der vorangegangenen Filtration ist der unfiltratseitige Steril-Luftfilter 32 durch ein Ventil gesperrt, sodass ein Fluidkontakt des Mediums (Produktlösung) mit dem filtratseitigen Steril-Luftfilter 32 ausgeschlossen ist.

Grundsätzlich kann jede der starren, druckstabilen Rohrleitungen der Vorrichtung 10 mit einem Schauglas ausgestattet werden. So können beispielsweise in der gemeinsamen Vorfilter-Eingangsleitung 34 der gemeinsame Hauptfilter-Ausgangsleitung 42 Füllstände und eine ausreichende Entlüftung visuell überwacht werden.

Für alle Ausführungsformen gilt, dass die Materialien, die bei der Einweg-Filtrationsvorrichtung 10 Verwendung finden (auch für etwaige flexible Schlauchleitungen etc.), sterilisierbar sind, insbesondere mittels Gammastrahlung, Wärme oder Begasung, bzw. autoklavierbar. Die Einweg-Filtrationsvorrichtung 10 kann somit im vormontierten, d. h. anschlussfertigen Zustand sterilisiert und verpackt oder zuerst verpackt und mit zusammen mit der Verpackung sterilisiert werden. Die gesamte Einweg-Filtrationsvorrichtung 10 kann nach der Auslieferung an einen Kunden dort mittels Steril-Konnektoren in einen bestehenden Filtrationsstrang eingebaut werden, d. h. sie ist sofort einsatzbereit.

Um eine fachgerechte Entsorgung der Einweg-Filtrationsvorrichtung 10 zu ermöglichen, welche einen Sterilisationsschritt in einem Autoklav beinhaltet, sind die Filtereinheiten 12 so in der Vorrichtung 10 miteinander verbunden, dass sie ohne großen Aufwand voneinander getrennt werden können. Die Trennung erfolgt bevorzugt steril mittels dem Produkt Quickseal^{®} (Aseptic Tube Sealing System), um eine Kontamination zu vermeiden. Für die Entsorgung werden die abgetrennten Segmente in ihrer Größe und ihrem Gewicht so gewählt, dass sie von einer Person getragen und in einen Autoklav transferiert werden können. Jedes abgetrennte Filtrationssegment weist mindestens ein Ventil auf, das während des Autoklavierens geöffnet werden kann, um einen Überdruck im Filtrationssegment während der Sterilisation zu vermeiden.

### Bezugszeichenliste

- 10: Einweg-Filtrationsvorrichtung
- 12: Filtereinheiten
- 12a: Vorfilter
- 12b: Hauptfilter
- 14: Halterung
- 16: Eingangsanschluss der Einweg-Filtrationsvorrichtung
- 18: Ausgangsanschluss der Einweg-Filtrationsvorrichtung
- 20: Entlüftungsleitung
- 22: unfiltratseitiger Steril-Luftfilter
- 24: Unfiltrat-Eingang einer Filtereinheit
- 26: unterer Filtrat-Ausgang einer Filtereinheit
- 28: oberer Filtrat-Ausgang einer Filtereinheit
- 30: Entlüftungsanschluss einer Filtereinheit
- 32: filtratseitiger Steril-Luftfilter
- 34: Vorfilter-Eingangsleitung
- 36: Vorfilter-Ausgangsleitung
- 38: Verbindungsleitung
- 40: Hauptfilter-Eingangsleitung
- 42: Hauptfilter-Ausgangsleitung

## Patentansprüche

1. Einweg-Vorrichtung (10) zur Filtration eines großen Mediumvolumens, mit einer Mehrzahl von Einweg-Filtereinheiten (12), von denen wenigstens einige, vorzugsweise alle, durch starre Leitungen, die durch druckstabile Rohrleitungen mit definiertem Durchmesser gebildet sind, miteinander verbunden sind, wobei die Filtereinheiten (12) mehrere Vorfilter (12a) und mehrere als Hohlfasercapsule ausgebildete Hauptfilter (12b) zur Virusfiltration umfassen, und wobei eine gemeinsame Ausgangsleitung (36) für mehrere Vorfilter (12a) vorgesehen ist, **dadurch gekennzeichnet, dass** zwischen den Vorfiltern (12a) und den Hauptfiltern (12b) in der Ausgangsleitung (36) wenigstens ein Sperrventil vorgesehen ist, um alle Hauptfilter (12b) zu einer von den Vorfiltern (12a) getrennten Gruppe zusammenschalten zu können, und dass für die Hauptfilter (12b) eine gemeinsame Entlüftungsleitung (20) vorgesehen ist, die zu einem unfiltratseitigen Steril-Luftfilter (22) führt, sodass über den Steril-Luftfilter (22) durch die Entlüftungsleitung (20) allen Hauptfiltern (12b) Prüfgas zugeführt werden kann für die Durchführung eines Integritätstests aller Hauptfilter (12b).

2. Einweg-Filtrationsvorrichtung (10) nach Anspruch 1, **dadurch gekennzeichnet, dass** zwischen den Vorfiltern (12a) und den Hauptfiltern (12b) eine starre Leitung aus einer druckstabilen Rohrleitung mit definiertem Durchmesser vorgesehen ist, und/oder dass eine Eingangsleitung (40) zu den Hauptfiltern (12b) als starre Leitung aus einer druckstabilen Rohrleitung mit definiertem Durchmesser ausgebildet ist.

3. Einweg-Filtrationsvorrichtung (10) nach einem der vorhergehenden Ansprüche, **dadurch gekennzeichnet, dass** eine gemeinsame Ausgangsleitung (36, 42) für die mehreren Vorfilter (12a) und/oder für die mehreren Hauptfilter (12b) eine starre Leitung ist, die durch eine druckstabile Rohrleitung mit definiertem Durchmesser gebildet ist.

4. Einweg-Filtrationsvorrichtung (10) nach einem der vorhergehenden Ansprüche, **dadurch gekennzeichnet, dass** sie sowohl einen gemeinsamen Eingangsanschluss (16) als auch einen gemeinsamen Ausgangsanschluss (18) für das Medium aufweist und mittels Steril-Konnektoren in einen Filtrationsstrang integrierbar ist.

5. Einweg-Filtrationsvorrichtung (10) nach einem der vorhergehenden Ansprüche, **dadurch gekennzeichnet, dass** die Filtereinheiten (12) und die starren Leitungen so angeordnet sind, dass alle Vorfilter (12a) und alle Hauptfilter (12b) jeweils parallel angeströmt werden.

6. Einweg-Filtrationsvorrichtung (10) nach einem der vorhergehenden Ansprüche, **dadurch gekennzeichnet, dass** die Vorfilter (12a) für eine Dead-End-Filtration und die Hauptfilter (12b) für eine Querstromfiltration ausgelegt sind.

7. Einweg-Filtrationsvorrichtung (10) nach einem der vorhergehenden Ansprüche, **dadurch gekennzeichnet, dass** einige der starren Leitungen durch gemeinsame Gehäuse von Filtereinheiten (12) gebildet sind.

8. Einweg-Filtrationsvorrichtung (10) nach einem der vorhergehenden Ansprüche, **dadurch gekennzeichnet, dass** wenigstens eine Filtereinheit (12) als Mehrfach-Capsule mit wenigstens zwei gleichartigen oder verschiedenen Filterelementen ausgebildet ist, die in dem gemeinsamen Gehäuse verbaut sind, wobei die Mehrfach-Capsule vorzugsweise wenigstens ein plissiertes Filterelement und ein Hohlfaserfilterlement aufweist.

9. Einweg-Filtrationsvorrichtung (10) nach Anspruch 8, soweit dieser nicht auf Anspruch 5 rückbezogen ist, **dadurch gekennzeichnet, dass** die Filterelemente so angeordnet sind, dass sie sequentiell angeströmt werden.

10. Einweg-Filtrationsvorrichtung (10) nach einem der vorhergehenden Ansprüche, **dadurch gekennzeichnet, dass** in die Entlüftungsleitung (20) ein druckstabiles Schauglas integriert ist und/oder dass in der Entlüftungsleitung (20) wenigstens ein Indikator angeordnet ist, der auf Wasser reagiert, und/oder dass zwischen dem Entlüftungsanschluss (20) und dem Eingang des Luftfilters (32) ein Schutzfilter zum Schutz des Luftfilters (32) zwischengeschaltet ist, und/oder wobei in der Entlüftungsleitung (20) oder am Steril-Luftfilter (22) ein freigebbares Entlüftungsventil vorgesehen ist.

11. Einweg-Filtrationsvorrichtung (10) nach einem der vorhergehenden Ansprüche, **dadurch gekennzeichnet, dass** wenigstens eine Filtereinheit (12), vorzugsweise alle Hauptfilter (12b), so ausgerichtet ist, dass sie von unten nach oben angeströmt wird, wobei vorzugsweise die wenigstens eine Filtereinheit (12) einen unteren Unfiltrat-Eingang (24) sowie einen unteren Filtrat-Ausgang (26) und einen oberen Filtrat-Ausgang (28) sowie einen oberen Entlüftungsanschluss (30) aufweist, wobei weiter vorzugsweise Ventile zum Sperren der unteren Unfiltrat-Eingänge (24) und zum Sperren der Entlüftungsanschlüsse (30) vorgesehen sind.

12. Einweg-Filtrationsvorrichtung (10) nach einem der vorhergehenden Ansprüche, **dadurch gekennzeichnet, dass** an einem Ausgang einer Filtereinheit (12) oder einer Gruppe von Filtereinheiten (12) ein Durchfluss-reduzierendes Element vorgesehen ist, um für einen Spülvorgang einen Differenzdruck entstehen zu lassen.

13. Einweg-Filtrationsvorrichtung (10) nach einem der vorhergehenden Ansprüche, **gekennzeichnet durch** einen Anschluss auf der Filtratseite der Vorrichtung (10), an den ein filtratseitiger Steril-Luftfilter (32) anschließbar ist, durch den nach Beendigung einer Filtration Gas zum Abführen von in der Vorrichtung (10) verbliebenem Filtrat gepumpt werden kann.

14. Verfahren zur Durchführung eines Integritätstests in einer Einweg-Filtrationsvorrichtung (10) wie in Anspruch 1 definiert zur Filtration eines großen Mediumvolumens,
wobei die Einweg-Filtrationsvorrichtung (10) mehrere Vorfilter (12a), mehrere als Hohlfasercapsulen ausgebildete Hauptfilter (12b) zur Virusfiltration und eine gemeinsame Ausgangsleitung (36) für die mehreren Vorfilter (12a) umfasst,
wobei zwischen den Vorfiltern (12a) und den Hauptfiltern (12b) in der Ausgangsleitung (26) ein Sperrventil vorgesehen ist,
wobei die Hauptfilter (12b) auf ihrer oberen Stirnseite Entlüftungsanschlüsse aufweisen, die in eine gemeinsame Entlüftungsleitung (20) münden, die zu einem unfiltratseitigen Steril-Luftfilter (22) führt, und
wobei das Verfahren folgende Schritte umfasst:
Gruppieren aller Hauptfilter (12a) unabhängig von den Vorfiltern (12b), indem das Sperrventil geschlossen wird, um die Hauptfilter (12a) von den Vorfiltern abzusperren, und
Zuführen von Prüfgas über den Steril-Luftfilter (22) durch die Entlüftungsleitung (20) zu allen Hauptfiltern (12a).

## Claims

1. A single-use device (10) for filtering a large volume of medium, comprising a plurality of single-use filter units (12), at least some of which, preferably all, are connected to each other by rigid pipes, which are formed by pressure-stable tubes having a defined diameter, wherein the filter units (12) comprise several prefilters (12a) and several main filters (12b) for virus filtration configured as hollow fiber capsules, and wherein a common outlet pipe (36) is provided for several prefilters (12a), **characterized in that** at least one shut-off valve is provided between the prefilters (12a) and the main filters (12b) in the outlet pipe (36), in order to be able to interconnect all main filters (12b) to a group separate from the prefilters (12a), and that a common vent pipe (20) is provided for the main filters (12b), which leads to an unfiltrate-side sterile air filter (22), so as to supply test gas to all main filters (12b) via the sterile air filter (22) through the vent pipe (20) for the performance of an integrity test of all main filters (12b).

2. The single-use filtration device (10) according to claim 1, **characterized in that** a rigid pipe from a pressure-stable tube having a defined diameter is provided between the prefilters (12a) and the main filters (12b), and/or **in that** an inlet pipe (40) to the main filters (12b) is configured as a rigid pipe from a pressure-stable tube having a defined diameter.

3. The single-use filtration device (10) according to any of the foregoing claims, **characterized in that** a common outlet pipe (36, 42) for the several prefilters (12a) and/or for the several main filters (12b) is a rigid pipe, which is formed by a pressure-stable tube having a defined diameter.

4. The single-use filtration device (10) according to any of the foregoing claims, **characterized in that** it has both a common inlet connection (16) and a common outlet connection (18) for the medium and can be integrated into a filtration branch by means of sterile connectors.

5. The single-use filtration device (10) according to any of the foregoing claims, **characterized in that** the filter units (12) and the rigid pipes are arranged such that all prefilters (12a) and all main filters (12b) are each exposed to a flow in parallel.

6. The single-use filtration device (10) according to any of the foregoing claims, **characterized in that** the prefilters (12a) are designed for dead-end filtration and the main filters (12b) for cross-flow filtration.

7. The single-use filtration device (10) according to any of the foregoing claims, **characterized in that** some of the rigid pipes are formed by common housings of filter units (12).

8. The single-use filtration device (10) according to any of the foregoing claims, **characterized in that** at least one filter unit (12) is configured as a multiple capsule having at least two identical or different filter elements installed in the common housing, wherein the multiple capsule preferably has at least one pleated filter element and one hollow fiber filter element.

9. The single-use filtration device (10) according to claim 8, provided it does not refer back to claim 5, **characterized in that** the filter elements are arranged so as to be exposed to a sequential flow.

10. The single-use filtration device (10) according to any of the foregoing claims, **characterized in that** a pressure-stable sight glass is integrated in the vent pipe (20) and/or that at least one indicator is arranged in the vent pipe (20), which reacts to water, and/or that a protective filter for protecting the air filter (32) is interposed between the vent connection (20) and the input of the air filter (32), and/or wherein a releasable vent valve is provided in the vent pipe (20) or on the sterile air filter (22).

11. The single-use filtration device (10) according to any of the foregoing claims, **characterized in that** at least one filter unit (12), preferably all main filters (12b), is oriented so as to be exposed to a flow from bottom to top, wherein preferably the at least one filter unit (12) has a lower unfiltrate inlet (24) as well as a lower filtrate outlet (26) and an upper filtrate outlet (28) as well as an upper vent connection (30), wherein further preferably valves for blocking the lower unfiltrate inlets (24) and for blocking the vent connections (30) are provided.

12. The single-use filtration device (10) according to any of the foregoing claims, **characterized in that** a flow-reducing element is provided at an outlet of a filter unit (12) or of a group of filter units (12) to produce a differential pressure for a flushing process.

13. The single-use filtration device (10) according to any of the foregoing claims, **characterized by** a connection on the filtrate side of the device (10) to which a filtrate-side sterile air filter (32) can be connected through which gas can be pumped after completion of a filtration for discharging filtrate remaining in the device (10).

14. A method for performing an integrity test in a single-use filtration device (10) as defined in claim 1 for filtering a large volume of medium,
wherein the single-use filtration device (10) comprises several prefilters (12a), several main filters (12b) for virus filtration configured as hollow fiber capsules and a common outlet pipe (36) for the several prefilters (12a),
wherein a shut-off valve is provided between the prefilters (12a) and the main filters (12b) in the outlet pipe (26),
wherein the main filters (12b) have vent connections on their upper front sides which flow into a common vent pipe (20), which leads to an unfiltrate-side sterile air filter (22), and
wherein the method comprises the following steps:
grouping of all main filters (12) separately from the prefilters (12b), by closing the shut-off valve to block the main filters (12a) from the prefilters, and
supplying test gas to all main filters (12a) via the sterile air filter (22) through the vent pipe (20).

## Revendications

1. Dispositif à usage unique (10) pour la filtration d'un grand volume de milieu, avec une pluralité d'unités de filtration (12) à usage unique, dont au moins certaines, de préférence toutes, sont reliées entre elles par des conduites rigides, qui sont formées par des tuyaux résistants à la pression avec un diamètre défini, dans lequel les unités de filtration (12) comprennent plusieurs préfiltres (12a) et plusieurs filtres principaux (12b) réalisés sous la forme de capsule à fibres creuses pour la filtration de virus, et dans lequel une conduite de sortie (36) commune est prévue pour plusieurs préfiltres (12a), **caractérisé en ce qu'**au moins une vanne d'arrêt est prévue entre les préfiltres (12a) et les filtres principaux (12b) dans la conduite de sortie (36), afin de pouvoir interconnecter tous les filtres principaux (12b) en un groupe séparé par les préfiltres (12a), et qu'une conduite d'aération (20) commune, qui mène à un filtre à air stérile (22) côté substance à filtrer, est prévue pour les filtres principaux (12b), de sorte qu'un gaz de contrôle peut être amené à tous les filtres principaux (12b) par l'intermédiaire du filtre à air stérile (22) à travers la conduite d'aération (20) pour la mise en œuvre d'un test d'intégrité de tous les filtres principaux (12b).

2. Dispositif de filtration à usage unique (10) selon la revendication 1, **caractérisé en ce qu'**une conduite rigide composée d'un tuyau résistant à la pression avec un diamètre défini est prévue entre les préfiltres (12a) et les filtres principaux (12b), et/ou qu'une conduite d'entrée (40) vers les filtres principaux (12b) est réalisée sous la forme d'une conduite rigide composée d'un tuyau résistant à la pression avec un diamètre défini.

3. Dispositif de filtration à usage unique (10) selon l'une quelconque des revendications précédentes, **caractérisé en ce qu'**une conduite de sortie (36, 42) commune pour les plusieurs préfiltres (12a) et/ou pour les plusieurs filtres principaux (12b) est une conduite rigide, qui est formée par un tuyau résistant à la pression avec un diamètre défini.

4. Dispositif de filtration à usage unique (10) selon l'une quelconque des revendications précédentes, **caractérisé en ce qu'**il présente aussi bien un raccord d'entrée (16) commun qu'un raccord de sortie (18) commun pour le milieu et peut être intégré dans une ligne de filtration au moyen de connecteurs stériles.

5. Dispositif de filtration à usage unique (10) selon l'une quelconque des revendications précédentes, **caractérisé en ce que** les unités de filtration (12) et les conduites rigides sont disposées de sorte que tous les préfiltres (12a) et tous les filtres principaux (12b) sont traversés respectivement parallèlement.

6. Dispositif de filtration à usage unique (10) selon l'une quelconque des revendications précédentes, **caractérisé en ce que** les préfiltres (12a) sont conçus pour une filtration statique et les filtres principaux (12b) pour une filtration à écoulement transversal.

7. Dispositif de filtration à usage unique (10) selon l'une quelconque des revendications précédentes, **caractérisé en ce que** certaines des conduites rigides sont formées par des boîtiers communs d'unités de filtration (12).

8. Dispositif de filtration à usage unique (10) selon l'une quelconque des revendications précédentes, **caractérisé en ce qu'**au moins une unité de filtration (12) est réalisée sous la forme d'une capsule multiple avec au moins deux éléments filtrants similaires ou différents, qui sont logés dans le boîtier commun, dans lequel la capsule multiple présente de préférence au moins un élément filtrant plissé et un élément filtrant à fibres creuses.

9. Dispositif de filtration à usage unique (10) selon la revendication 8, dans la mesure où celle-ci n'est pas rattachée à la revendication 5, **caractérisé en ce que** les éléments filtrants sont disposés de sorte qu'ils sont traversés de manière séquentielle.

10. Dispositif de filtration à usage unique (10) selon l'une quelconque des revendications précédentes, **caractérisé en ce qu'**un regard en verre résistant à la pression est intégré dans la conduite d'aération (20) et/ou qu'au moins un indicateur, qui réagit à l'eau, est disposé dans la conduite d'aération (20), et/ou qu'un filtre de protection pour protéger le filtre à air (32) est intercalé entre le raccord d'aération (20) et l'entrée du filtre à air (32), et/ou dans lequel une vanne d'aération pouvant être libérée est prévue dans la conduite d'aération (20) ou sur le filtre à air stérile (22).

11. Dispositif de filtration à usage unique (10) selon l'une quelconque des revendications précédentes, **caractérisé en ce qu'**au moins une unité de filtration (12), de préférence tous les filtres principaux (12b), est orientée de sorte qu'elle est traversée de bas en haut, dans lequel de préférence la au moins une unité de filtration (12) présente une entrée de substance à filtrer inférieure (24) ainsi qu'une sortie de filtrat inférieure (26) et une sortie de filtrat supérieure (28) ainsi qu'un raccord d'aération supérieur (30), dans lequel plus préférablement des vannes sont prévues pour bloquer les entrées de substance à filtrer inférieures (24) et pour bloquer les raccords d'aération (30).

12. Dispositif de filtration à usage unique (10) selon l'une quelconque des revendications précédentes, **caractérisé en ce qu'**un élément de réduction de débit est prévu sur une sortie d'une unité de filtration (12) ou d'un groupe d'unités de filtration (12), pour laisser se former une différence de pression pour un processus de rinçage.

13. Dispositif de filtration à usage unique (10) selon l'une quelconque des revendications précédentes, **caractérisé par** un raccord sur le côté filtrat du dispositif (10), auquel un filtre à air stérile (32) côté filtrat peut être raccordé, par lequel une fois une filtration terminée du gaz à évacuer du filtrat restant dans le dispositif (10) peut être pompé.

14. Procédé pour la mise en œuvre d'un test d'intégrité dans un dispositif de filtration à usage unique (10) tel que défini dans la revendication 1 pour la filtration d'un grand volume de milieu,
dans lequel le dispositif de filtration à usage unique (10) comprend plusieurs préfiltres (12a), plusieurs filtres principaux (12b) réalisés sous la forme de capsules à fibres creuses pour la filtration de virus et une conduite de sortie (36) commune pour les plusieurs préfiltres (12a),
dans lequel une vanne d'arrêt est prévue entre les préfiltres (12a) et les filtres principaux (12b) dans la conduite de sortie (26),
dans lequel les filtres principaux (12b) présentent sur leur face frontale supérieure des raccords d'aération, qui débouchent dans une conduite d'aération (20) commune, qui mène à un filtre à air stérile (22) côté substance à filtrer, et
dans lequel le procédé comprend les étapes suivantes :
le groupement de tous les filtres principaux (12a) indépendamment des préfiltres (12b), du fait que la vanne d'arrêt est fermée, afin d'isoler les filtres principaux (12a) des préfiltres, et
l'amenée du gaz de contrôle par l'intermédiaire du filtre à air stérile (22) à travers la conduite d'aération (20) à tous les filtres principaux (12a).
